# EUROPEAN PATENT APPLICATION

(11) **EP 4 422 204 A1**
(43) Date of publication of application: **28.08.2024**
(21) Application number: 21964455.6
(22) Date of filing: 22.11.2021
(51) Int. Cl.: H04Q 11/00

(54) **DATA PROCESSING METHOD AND RELATED APPARATUS**

(71) Applicant: Huawei Technologies Co., Ltd., Shenzhen, Guangdong 518129 (CN)
(72) Inventor: GUO, Chunlong, Shenzhen, Guangdong 518129 (CN); YU, Xiangqi, Shenzhen, Guangdong 518129 (CN); YAO, Liang, Shenzhen, Guangdong 518129 (CN); YANG, Bin, Shenzhen, Guangdong 518129 (CN)
(74) Representative: Maiwald GmbH
(86) International application number: PCT/CN2021/132092
(87) International publication number: WO 2023/087304

(57) **Abstract**

A data processing method and a related apparatus are provided, to implement complete decoupling between base station data and IP data at a data link layer and a protocol layer, and resolve a security problem and a bandwidth occupation problem. The method specifically includes: An aggregation device receives first base station data and first Ethernet Protocol IP data (1001). The aggregation device converts the first IP data into a corresponding first single-ended signal, and converts the first base station data into a first radio frequency signal (1002). The aggregation device combines the first radio frequency signal and the first single-ended signal into one first electrical signal, where corresponding spectrum bandwidths are allocated to the first radio frequency signal and the first single-ended signal respectively (1003). The aggregation device converts the first electrical signal into a first optical signal (1004), and transmits the first optical signal to a head-end device through an optical fiber.

## Description

### TECHNICAL FIELD

This application relates to the communications field, and in particular, to a data processing method and a related apparatus.

### BACKGROUND

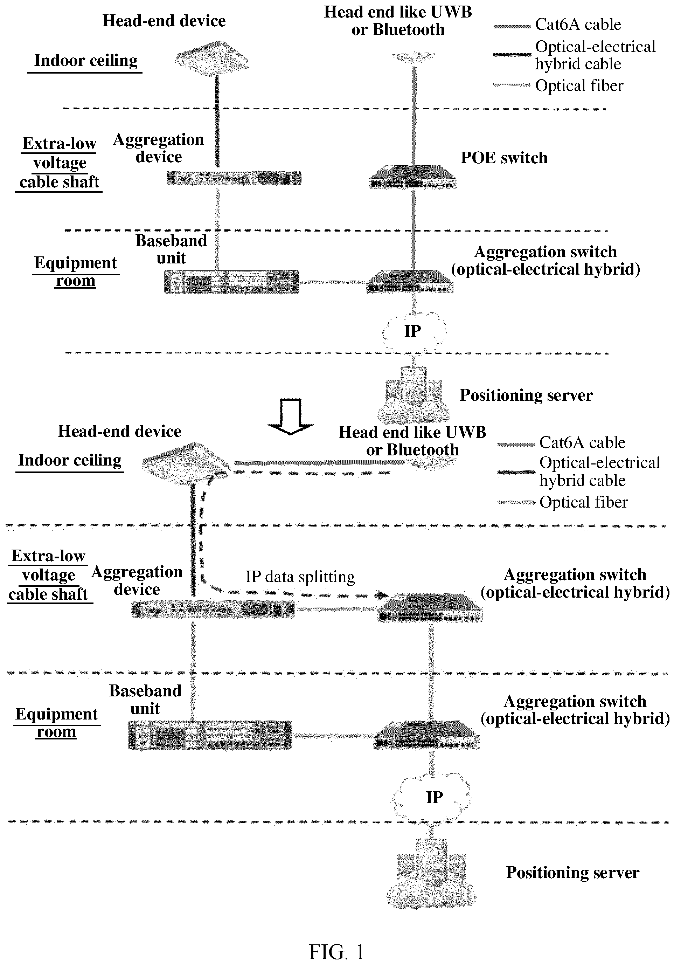

Currently, indoor digitalization needs base stations to provide indoor coverage solutions that meet capacity requirements. The indoor coverage solutions provided by the base stations mainly provide 3rd Generation Partnership Project (3rd Generation Partnership Project, 3GPP) signal coverage. Usually, the indoor coverage solution includes an aggregation device and a head-end device. In current networking application and future evolution, to reduce coverage costs, the aggregation device needs to support co-transmission of Ethernet Protocol (Internet Protocol, IP) data and 3GPP data, to provide Wi-Fi data backhaul in a scenario in which Wi-Fi coverage is added to indoor coverage. In the future evolution, a base station device needs to provide aggregated backhaul data, such as an indoor positioning beacon, transmitted based on IP data. Cables that have been deployed can be reused in the co-transmission, to reduce deployment costs. A specific deployment change may be shown in FIG. 1. In the system architecture shown in FIG. 1, transmission and switching technologies and devices that are related to Ethernet transmission are mainly used to implement the co-transmission of the IP data and the 3GPP data. That is, interfaces and channels that support two media communication protocols are disposed in an aggregation device, and the interfaces and channels perform communication according to respective protocols.

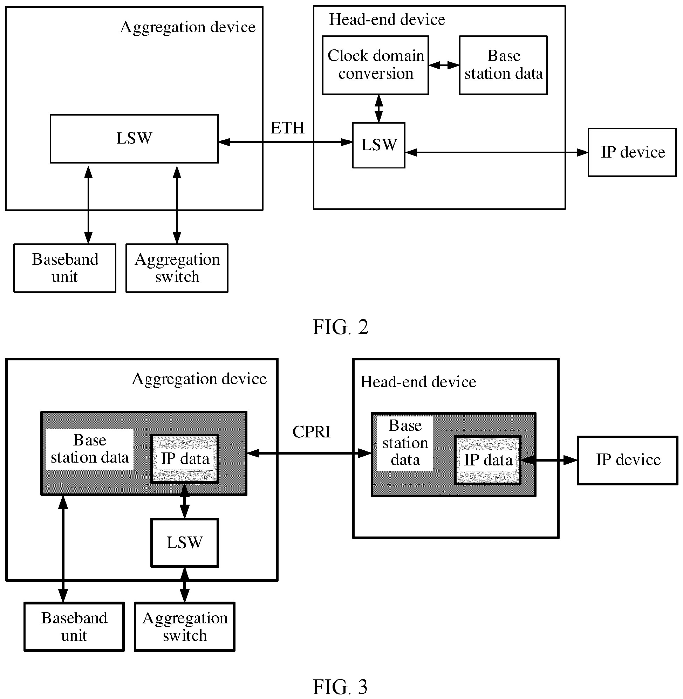

To be specific, the co-transmission of the IP data and the 3GPP data may be implemented in the following two manners. As shown in FIG. 2, the aggregation device supports Ethernet (EtherNet, ETH)/IP switching, and base station data is transmitted in an ETH packet manner. The base station data is in a clock domain of 3.84 MHz, and the IP data is in a clock domain of 125 MHz. Therefore, clock domain conversion is needed between the base station data and the IP data, to implement format unification at a data link layer. Because the IP data is an ETH packet, formats of the base station data and the IP data are unified at the data link layer. This can implement more flexible networking. As shown in FIG. 3, a common public radio interface (common public radio interface, CPRI) interface is still used for connection between the aggregation device and the head-end device. An ETH port is provided for the head-end device to support cascading of a third-party IP device. In the head-end device, IP data is input into a CPRI payload for transmission, and a part of asynchronous transfer mode cross connect (asynchronous transfer mode cross connect, AxC) is reserved for the IP data. In the aggregation device, the data of the third-party IP device is deframed from the CPRI, and then is input to a third-party ETH aggregation switch through an ETH port provided by the aggregation device. In this way, IP data backhaul is implemented.

However, in the solution shown in FIG. 2, after the clock domain conversion of the base station data, a delay prolongs, and consequently air interface performance decreases. In addition, mixed exchange between the base station data and the IP data and diversity and complexity of an IP service bring a specific transmission security risk to a base station service. In the solution shown in FIG. 3, the IP data occupies specific bandwidths, causing a decrease in available bandwidths for transmitting the base station data. Therefore, complete non-mutual affect between the two types of data cannot be implemented.

### SUMMARY

Embodiments of this application provide a data processing method and a related apparatus, to implement complete decoupling between base station data and IP data at a data link layer and a protocol layer, and resolve a security problem and a bandwidth occupation problem.

According to a first aspect, this application provides a data processing method, including: An aggregation device receives first base station data and first IP data. The aggregation device converts the first IP data into a corresponding first single-ended signal, and converts the first base station data into a first radio frequency signal. The aggregation device combines the first radio frequency signal and the first single-ended signal into one first electrical signal, where corresponding spectrum bandwidths are allocated to the first radio frequency signal and the first single-ended signal respectively. The aggregation device converts the first electrical signal into a first optical signal, and transmits the first optical signal to a head-end device through an optical fiber.

In the technical solutions provided in this application, the aggregation device performs digital-to-analog conversion on the IP data to obtain the single-ended signal, that is, a radio frequency signal that can be transmitted on the optical fiber, converts the base station data into the radio frequency signal, combines, into one optical signal, the radio frequency signal and the radio frequency signal generated based on the IP data through conversion, and transmits the optical signal through the optical fiber. In this way, aggregation and co-transmission of the base station data and the IP data are implemented. In addition, because the base station data and the IP data can be transmitted on the optical fiber at the same time, co-cable medium transmission is implemented. This reduces repeated cabling that is for a large amount of indoor network coverage, reduces indoor coverage deployment costs, and improves deployment flexibility. In addition, because a spectrum of the optical fiber is wide, different spectrums are allocated to the base station data and the IP data respectively, so that the IP data transmission and the base station data transmission are completely decoupled, and non-mutual affect between the two types of data is implemented in performance and bandwidth, thereby providing huge space for future evolution and implementing independent evolution of each networking.

Optionally, in this embodiment, according to different transmission protocols supported by the aggregation device, the aggregation device may convert the first IP data into the corresponding first single -ended signal in the following several possible implementations.

In a possible implementation, the aggregation device includes a 100BASE-TX protocol-based local area network switch (LAN Switch). In this case, when implementing digital-to-analog conversion of IP data, the aggregation device needs to convert the first IP data into a first differential signal by using an Ethernet physical layer component (namely, ETH PHY); and then the aggregation device converts the first differential signal into the first single-ended signal.

In another possible implementation, the aggregation device includes a 1000BASE-X protocol-based LAN switch. In this case, when the aggregation device implements analog-to-digital conversion of IP data, the aggregation device converts the first IP data into a first differential signal by using a Serdes interface that supports a 1000BASE-X protocol and that is in the LAN switch; and then the aggregation device converts the first differential signal into the first single-ended signal.

Optionally, the foregoing describes a function of the aggregation device in a downlink direction, and the following describes a function of the aggregation device in an uplink direction. The method specifically includes: The aggregation device receives a second optical signal sent by the head-end device, where the second optical signal is generated based on a second radio frequency signal and a second single-ended signal through combination, corresponding spectrum bandwidths are allocated to the second radio frequency signal and the second single-ended signal respectively, the second radio frequency signal is obtained based on second base station data through conversion, and the second single-ended signal is obtained based on second IP data through conversion. The aggregation device splits the second optical signal to obtain the second radio frequency signal and the second single-ended signal. The aggregation device converts the second single-ended signal into the second IP data and outputs the second IP data, and converts the second radio frequency signal into the second base station data and outputs the second base station data.

Optionally, in this embodiment, according to different transmission protocols supported by the aggregation device, the aggregation device may convert the second single-ended signal into the second IP data in the following several possible implementations.

In a possible implementation, the aggregation device includes a 100BASE-TX protocol-based LAN switch. In this case, when the aggregation device implements digital-to-analog conversion of IP data, the aggregation device converts the second single-ended signal into a second differential signal; and then the aggregation device converts the second differential signal into the second IP data by using an Ethernet physical layer component.

In another possible implementation, the aggregation device includes a 1000BASE-X protocol-based LAN switch. In this case, when the aggregation device implements digital-to-analog conversion of IP data, the aggregation device converts the second single-ended signal into a second differential signal; and the aggregation device converts the second differential signal into the second IP data by using a Serdes interface that supports the 1000BASE-X protocol and that is in the LAN switch.

Optionally, because optical-to-electrical conversion and electrical-to-optical conversion are large, when the aggregation device serves as a receive side, an amplifier needs to be added, and the amplifier is configured to amplify the second single-ended signal and the second radio frequency signal, to meet a receiving requirement of the ETH PHY

According to a second aspect, this application provides a data processing method, specifically including: A head-end device receives a first optical signal transmitted by an aggregation device through an optical fiber, where the first optical signal is generated based on a first radio frequency signal and a first single-ended signal through combination, corresponding spectrum bandwidths are allocated to the first radio frequency signal and the first single-ended signal respectively, the first radio frequency signal is obtained based on first base station data through conversion, and the first single-ended signal is obtained based on first IP data through conversion. The head-end device splits the first optical signal to obtain the first radio frequency signal and the first single-ended signal. The head-end device converts the first single-ended signal into the first IP data and outputs the first IP data, and converts the first radio frequency signal into the first base station data and outputs the first base station data.

In the technical solutions provided in this application, the aggregation device performs analog-to-digital conversion on the IP data to obtain the single-ended signal, that is, a radio frequency signal that can be transmitted on the optical fiber, converts the base station data into the radio frequency signal, combines, into one optical signal, the radio frequency signal and the radio frequency signal generated based on the IP data through conversion, and transmits the optical signal through the optical fiber. In this way, aggregation and co-transmission of the base station data and the IP data are implemented. In addition, because the base station data and the IP data can be transmitted on the optical fiber at the same time, co-cable medium transmission is implemented. This reduces repeated cabling that is for a large amount of indoor network coverage, reduces indoor coverage deployment costs, and improves deployment flexibility. In addition, because a spectrum of the optical fiber is wide, different spectrums are allocated to the base station data and the IP data respectively, so that the IP data transmission and the base station data transmission are completely decoupled, and non-mutual affect between the two types of data is implemented in performance and bandwidth, thereby providing huge space for future evolution and implementing independent evolution of each networking.

Optionally, in this embodiment, according to different transmission protocols supported by the head-end device, the head-end device may convert the first single-ended signal into the first IP data in the following several possible implementations.

In a possible implementation, the head-end device supports 100BASE-TX. When the head-end device implements digital-to-analog conversion of IP data, the head-end device converts the first single-ended signal into a first differential signal; and then the head-end device converts the first differential signal into the first IP data by using two Ethernet physical layer components that are connected back to back.

In another possible implementation, the head-end device supports a 1000BASE-X protocol. When the head-end device implements digital-to-analog conversion of IP data, the head-end device converts the first single-ended signal into a first differential signal; and the head-end device converts the first differential signal into the first IP data by using one Ethernet physical layer component.

Optionally, because optical-to-electrical conversion and electrical-to-optical conversion are large, when the head-end device serves as a receive side, an amplifier needs to be added, and the amplifier is configured to amplify the first single-ended signal and the first radio frequency signal, to meet a receiving requirement of the ETH PHY

Optionally, the foregoing describes a function of the head-end device in a downlink direction, and the following describes a function of the head-end device in an uplink direction. The method specifically includes: The head-end device receives second base station data and second IP data. The head-end device converts the second IP data into a corresponding second single-ended signal, and converts the second base station data into a second radio frequency signal. The head-end device combines the second radio frequency signal and the second single-ended signal into one second electrical signal, where corresponding spectrum bandwidths are allocated to the second radio frequency signal and the second single-ended signal respectively. The head-end device converts the second electrical signal into a second optical signal, and transmits the second optical signal to the aggregation device through the optical fiber.

Optionally, in this embodiment, according to different transmission protocols supported by the head-end device, the head-end device may convert the second IP data into the corresponding second single-ended signal in the following several possible implementations.

In a possible implementation, the head-end device supports 100BASE-TX. When the head-end device implements analog-to-digital conversion of IP data, the head-end device converts the second IP data into a second differential signal by using two Ethernet physical layer components that are connected back to back; and the head-end device converts the second differential signal into the second single-ended signal.

In another possible implementation, the head-end device supports the 1000BASE-X protocol. When the head-end device implements analog-to-digital conversion of IP data, the head-end device converts the second IP data into a second differential signal by using one Ethernet physical layer component; and the head-end device converts the second differential signal into the second single-ended signal.

According to a third aspect, this application provides an aggregation device. The aggregation device has a function of implementing behavior of the aggregation device in the first aspect. The function may be implemented by hardware, or may be implemented by hardware executing corresponding software. The hardware or the software includes one or more modules corresponding to the function.

In a possible implementation, the aggregation device includes units or modules configured to perform the steps in the first aspect. For example, the aggregation device includes: a first transceiver module, configured to receive first base station data; a second transceiver module, configured to receive first Ethernet Protocol IP data; a first conversion module, configured to convert the first base station data into a first radio frequency signal; a second conversion module, configured to convert the first IP data into a corresponding first single-ended signal; and a beam combining module, configured to combine the first radio frequency signal and the first single-ended signal into one first electrical signal, where corresponding spectrum bandwidths are allocated to the first radio frequency signal and the first single-ended signal respectively; and a radio over fiber ROF optical module, configured to: convert the first electrical signal into a first optical signal, and transmit the first optical signal to a head-end device through an optical fiber.

Optionally, the aggregation device further includes a storage module, configured to store program instructions and data that are needed for the aggregation device.

In a possible implementation, the apparatus includes a processor and a transceiver. The processor is configured to support the aggregation device to perform a corresponding function in the method provided in the first aspect. The transceiver is configured to indicate communication between the aggregation device and the head-end device. Optionally, the apparatus may further include a memory. The memory is configured to be coupled to the processor, and the memory stores program instructions and data that are needed for the aggregation device.

In a possible implementation, the aggregation device includes a communication interface and a logic circuit. The communication interface is configured to receive first base station data and receive first Ethernet Protocol IP data. The logic circuit is configured to: convert the first base station data into a first radio frequency signal; convert the first IP data into a corresponding first single-ended signal; combine the first radio frequency signal and the first single-ended signal into one first electrical signal, where corresponding spectrum bandwidths are allocated to the first radio frequency signal and the first single-ended signal respectively; and convert the first electrical signal into a first optical signal. The communication interface is further configured to output the first optical signal.

Any processor mentioned above may be a general-purpose central processing unit (Central Processing Unit, CPU), a microprocessor, an application-specific integrated circuit (application-specific integrated circuit, ASIC), or one or more integrated circuits configured to control program execution of the data transmission methods in the foregoing aspects.

According to a fourth aspect, this application provides a head-end device. The head-end device has a function of implementing behavior of the head-end device in the second aspect. The function may be implemented by hardware, or may be implemented by hardware executing corresponding software. The hardware or the software includes one or more modules corresponding to the function.

In a possible implementation, the head-end device includes units or modules configured to perform the steps in the second aspect. For example, the head-end device includes: a radio over fiber ROF optical module, configured to receive a first optical signal transmitted by an aggregation device through an optical fiber, where the first optical signal is obtained through conversion, by a ROF optical module of the aggregation device, of an electrical signal generated based on a first radio frequency signal and a first single-ended signal through combination, corresponding spectrum bandwidths are allocated to the first radio frequency signal and the first single-ended signal respectively, the first radio frequency signal is obtained based on first base station data through conversion, and the first single-ended signal is obtained based on first IP data through conversion; a beam splitting module, configured to split the first optical signal to obtain the first radio frequency signal and the first single-ended signal; a first conversion module, configured to convert the first radio frequency signal into the first base station data; a first transceiver module, configured to output the first base station data; a second conversion module, configured to convert the first single-ended signal into the first IP data; and a second transceiver module, configured to output the first IP data.

Optionally, the head-end device further includes a storage module, configured to store program instructions and data that are needed for the head-end device.

In a possible implementation, the head-end device includes a processor and a transceiver. The processor is configured to support the head-end device to perform a corresponding function in the method provided in the second aspect. The transceiver is configured to indicate communication between the head-end device and the aggregation device. Optionally, the head-end device may further include a memory. The memory is configured to be coupled to the processor, and the memory stores program instructions and data that are needed for the head-end device.

In a possible implementation, the head-end device includes a communication interface and a logic circuit. The communication interface is configured to receive a first optical signal transmitted by the aggregation device through the optical fiber, where the first optical signal is obtained through conversion, by the ROF optical module of the aggregation device, of an electrical signal generated based on a first radio frequency signal and a first single-ended signal through combination, corresponding spectrum bandwidths are allocated to the first radio frequency signal and the first single-ended signal respectively, the first radio frequency signal is obtained based on first IP data through conversion, and the first single-ended signal is obtained based on first IP data through conversion. The logic circuit is configured to split the first optical signal to obtain the first radio frequency signal and the first single-ended signal; convert the first radio frequency signal into the first base station data; and convert the first single-ended signal into the first IP data. The communication interface is further configured to output the first base station data and output the first IP data.

Any processor mentioned above may be a CPU, a microprocessor, an ASIC, or one or more integrated circuits configured to control program execution of the data processing methods in the foregoing aspects.

According to a fifth aspect, an embodiment of this application provides a computer-readable storage medium. The computer storage medium stores computer instructions, and the computer instructions are used to perform the method in any possible implementation of any one of the foregoing aspects.

According to a sixth aspect, an embodiment of this application provides a computer program product including instructions. When the computer program product runs on a computer, the computer is enabled to perform the method according to any one of the foregoing aspects.

According to a seventh aspect, an embodiment of this application provides a communication system. The system includes the aggregation device and the head-end device in the foregoing aspects.

### BRIEF DESCRIPTION OF DRAWINGS

FIG. 1 is a schematic of a system architecture for co-transmission of base station data and IP data;
FIG. 2 is a schematic flowchart of co-transmission of base station data and IP data;
FIG. 3 is another schematic flowchart of co-transmission of base station data and IP data;
FIG. 4 is a schematic flowchart of co-transmission of base station data and IP data according to an embodiment of this application;
FIG. 5a is a diagram of a system architecture for performing analog-to-digital conversion and digital-to-analog conversion on IP data according to an embodiment of this application;
FIG. 5b is another diagram of a system architecture for performing analog-to-digital conversion and digital-to-analog conversion on IP data according to an embodiment of this application;
FIG. 6 is a schematic of spectrum allocation for base station data and IP data according to an embodiment of this application;
FIG. 7a is another diagram of a system architecture for performing analog-to-digital conversion and digital-to-analog conversion on IP data according to an embodiment of this application;
FIG. 7b is another diagram of a system architecture for performing analog-to-digital conversion and digital-to-analog conversion on IP data according to an embodiment of this application;
FIG. 8 is another schematic of spectrum allocation for base station data and IP data according to an embodiment of this application;
FIG. 9 is another diagram of a system architecture for performing analog-to-digital conversion and digital-to-analog conversion on IP data according to an embodiment of this application;
FIG. 10 is a schematic of an embodiment of a data processing method according to an embodiment of this application;
FIG. 11 is a schematic of an embodiment of an aggregation device according to an embodiment of this application;
FIG. 12 is a schematic of another embodiment of an aggregation device according to an embodiment of this application;
FIG. 13 is a schematic of an embodiment of a head-end device according to an embodiment of this application; and
FIG. 14 is a schematic of another embodiment of a head-end device according to an embodiment of this application.

### DESCRIPTION OF EMBODIMENTS

To make objectives, technical solutions, and advantages of this application clearer, the following describes embodiments of this application with reference to the accompanying drawings. It is clear that the described embodiments are merely some but not all of embodiments of this application. Persons of ordinary skill in the art may learn that, as a new application scenario emerges, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments described herein can be implemented in other orders than the order illustrated or described herein. Moreover, the terms "include", "comprise" and any other variants mean to cover the non-exclusive inclusion. For example, a process, method, system, product, or device that includes a list of steps or modules is not necessarily limited to those steps or modules, but may include other steps or modules not expressly listed or inherent to such a process, method, system, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Unit division in this application is logical division. During actual application, there may be another division manner during implementation. For example, a plurality of units may be combined into or integrated into another system, or some features may be ignored or may not be performed. In addition, the displayed or discussed mutual couplings, direct couplings, or communication connections may be implemented through some interfaces. The indirect couplings or communication connections between the units may be implemented in an electrical form or another similar form. This is not limited in this application. In addition, units or subunits described as separate parts may be or may not be physically separated, may be or may not be physical units, or may be distributed to a plurality of circuit units. Some or all of the units may be selected based on an actual requirement to achieve an objective of the solutions in this application.

Currently, indoor digitalization needs base stations to provide indoor coverage solutions that meet capacity requirements. The indoor coverage solutions provided by the base stations mainly provide 3GPP signal coverage. Usually, the indoor coverage solution includes an aggregation device and a head-end device. In current networking application and future evolution, to reduce coverage costs, the aggregation device needs to support co-transmission of IP data and 3GPP data (that is, base station data in this application), to provide Wi-Fi data backhaul in a scenario in which Wi-Fi coverage is added to indoor coverage. In the future evolution, a base station device needs to provide aggregated backhaul data, such as an indoor positioning beacon, transmitted based on IP data. Cables that have been deployed can be reused in the co-transmission, to reduce deployment costs. A specific deployment change may be shown in FIG. 1. In the system architecture shown in FIG. 1, transmission and switching technologies and devices that are related to Ethernet transmission are mainly used to implement the co-transmission of the IP data and the 3GPP data. That is, interfaces and channels that support two media communication protocols are disposed in an aggregation device, and the interfaces and channels perform communication according to respective protocols. To be specific, the co-transmission of the IP data and the base station data may be implemented in the following two manners. As shown in FIG. 2, the aggregation device supports ETH/IP switching, and base station data is transmitted in an ETH packet manner. The base station data is in a clock domain of 3.84 MHz, and the IP data is in a clock domain of 125 MHz. Therefore, clock domain conversion is needed between the base station data and the IP data, to implement format unification at a data link layer. Because the IP data is an ETH packet, formats of the base station data and the IP data are unified at the data link layer. This can implement more flexible networking. As shown in FIG. 3, a CPRI interface is still used for connection between an aggregation device and a head-end device. An ETH port is provided for the head-end device to support cascading of a third-party IP device. In the head-end device, IP data is input into a CPRI payload for transmission, and a part of AxC is reserved for the IP data. In the aggregation device, the data of the third-party IP device is deframed from the CPRI, and then is input to a third-party ETH aggregation switch through an ETH port provided by the aggregation device. In this way, IP data backhaul is implemented. However, in the solution shown in FIG. 2, after the clock domain conversion of the base station data, a delay prolongs, and consequently air interface performance decreases. In addition, mixed exchange between the base station data and the IP data and diversity and complexity of an IP service bring a specific transmission security risk to a base station service. In the solution shown in FIG. 3, the IP data occupies specific bandwidths, causing a decrease in available bandwidths for transmitting the base station data. Therefore, complete non-mutual affect between the two types of data cannot be implemented.

To resolve the foregoing problems, embodiments of this application provide a data processing method, specifically including: An aggregation device receives first base station data and first IP data. The aggregation device converts the first IP data into a corresponding first single-ended signal, and converts the first base station data into a first radio frequency signal. The aggregation device combines the first radio frequency signal and the first single-ended signal into one first electrical signal, where corresponding spectrum bandwidths are allocated to the first radio frequency signal and the first single-ended signal respectively. The aggregation device converts the first electrical signal into a first optical signal, and transmits the first optical signal to a head-end device through an optical fiber.

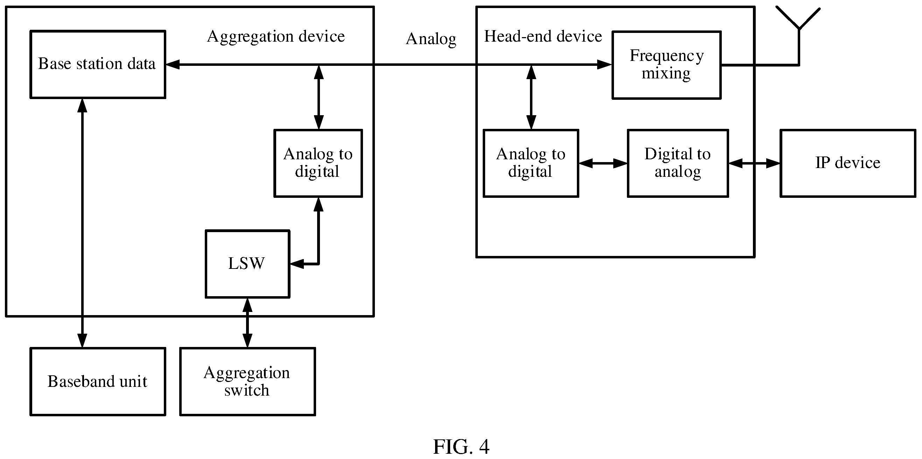

In this solution, a schematic flowchart of co-transmission of the base station data and the IP data may be shown in FIG. 4. The aggregation device respectively uses different interfaces to receive base station data sent by a baseband unit and IP data sent by an aggregation switch. Next, the aggregation device directly converts the base station data into a radio frequency signal (that is, an analog signal), and converts the IP data into a radio frequency signal (that is, an analog signal) through analog-to-digital conversion by using a local area network switch (LAN Switch, LSW). Then, the aggregation device combines two analog signals and converts a combined signal into an analog optical signal. Finally, the aggregation device sends the analog optical signal to the head-end device through the optical fiber. After receiving the analog optical signal, the head-end device splits the analog optical signal, performs frequency mixing on radio frequency data converted from the base station data, and sends data obtained through frequency mixing through an antenna, and sends the IP data obtained after digital-to-analog conversion to a third-party IP device.

In this embodiment, according to different protocols supported by the LSW in the aggregation device, system architectures for performing analog-to-digital conversion and digital-to-analog conversion on the IP data are different, which may be specifically as follows:

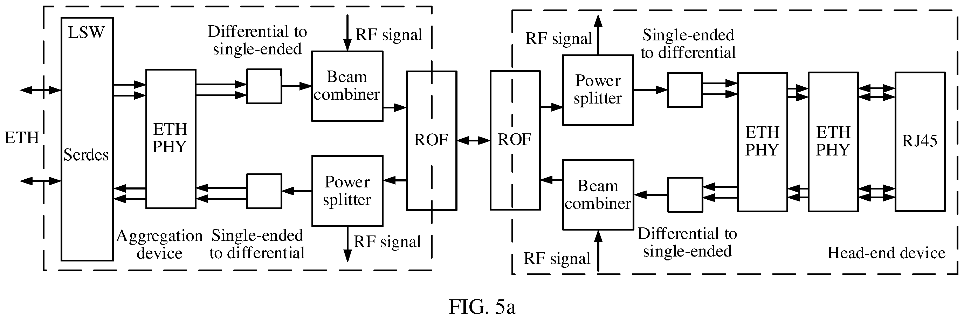

In a possible implementation, the LSW in the aggregation device supports 100BASE-TX, and the LSW in the aggregation device supports 100BASE-TX. According to 100BASE-TX, two pairs of category 5 unshielded twisted pairs whose impedance is 100 ohms are used, and a maximum transmission distance is 100 meters. One pair is used to send data, and the other pair is used to receive data. According to 100BASE-TX, a 4B/5B coding mode is used. To be specific, every 4-bit data is represented by a 5-bit code group. A code element utilization of this coding mode is 80%. Then, the 4B/5B code is converted into non-return-to-zero inverted code (Non-Return-to-Zero Inverted Code, NRZI) for transmission. The level is a multi-level transmission code (Multi-Level Transmit-3, MLT-3) level. The actual transmission bandwidth is 30 megahertz (MHz). In this solution, a system architecture for performing analog-to-digital conversion and digital-to-analog conversion on the IP data in the aggregation device is shown in FIG. 5a. The LSW obtains IP data sent by an external IP device through an uplink ETH interface. The LSW provides a MAC interface (herein, 100MBASE-X) to connect to an Ethernet physical layer component (namely, ETH PHY component) that supports a 100M mode. After internal 4B-5B encoding, the ETH PHY component outputs, from a coper-side interface according to the 100M base-TX standard, a signal satisfying the MLT-3 level standard. The signal is usually applicable to a differential signal transmitted on a network cable. Because an input port of a ROF optical module is single-ended input, the aggregation device further includes a differential to single-ended conversion module, configured to convert a differential signal output by the ETH PHY component into a single-ended signal. Then, a combiner combines the single-ended signal and a radio frequency signal converted by the base station into one electrical signal. Finally, the electrical signal is input to the ROF module for electrical-to-optical conversion (that is, the electrical signal is converted into an optical signal). In this case, the optical signal may be transmitted remotely on an optical fiber. After receiving the optical signal, the head-end device first needs to split the optical signal to obtain a radio frequency signal corresponding to the base station data and a radio frequency signal corresponding to the IP data (herein, the foregoing functions may be implemented by using a power splitter). Then, the radio frequency signal corresponding to the base station data is directly output through a corresponding interface, and the radio frequency signal corresponding to the IP data needs to be converted, by using a single-ended to differential conversion module, from a single-ended signal into a differential signal applicable to network cable transmission (it may be understood that, in this embodiment, a device for implementing differential to single-ended conversion and a device for implementing single-ended to differential conversion may be a same device that integrates the foregoing two functions). Then, after the differential signal is demodulated by the 1^{st} ETH PHY component in the head-end device, a coper-side signal is obtained. Because the head-end device needs to provide a standard ETH interface (for example, in the R45 form) for connection to a third-party IP device, the head-end device needs two ETH PHYs that are back to back. In this way, a standard 100M BASE-TX interface may be provided for connection to the third-party IP device by using the 2^{nd} ETH PHY.

The foregoing describes downlink direction data transmission. The following describes uplink direction data transmission by using a system architecture shown in FIG. 5a as an example.

The head-end device receives, through the standard ETH interface (for example, in the R45 form), IP data sent by an external IP device, and receives the base station data through another interface. Then, the head-end device provides a standard 100M BASE-TX interface by using the 1^{st} ETH PHY (that is, the 2^{nd} ETH PHY) in the uplink direction, to implement connection to the external IP device, and then implements MAC-side interface output by using the 2^{nd} ETH PHY (that is, the 1^{st} ETH PHY) in the uplink direction. Because the two ETH PHYs are connected back to back, the IP data is output, through the MAC-side interface of the second ETH PHY in the uplink direction, as a differential signal applicable to network cable transmission. Because an input port of a ROF optical module is single-ended input, the head-end device further includes a differential to single-ended conversion module, configured to convert a differential signal output by the 2^{nd} ETH PHY component that is in the uplink direction into a single-ended signal. Then, a combiner combines the single-ended signal and a radio frequency signal converted by the base station, to generate one electrical signal. Finally, the electrical signal is input to the ROF module for electrical-to-optical conversion (that is, the electrical signal is converted into an optical signal). In this case, the optical signal may be transmitted remotely on an optical fiber. After receiving the optical signal, the aggregation device first needs to split the optical signal to obtain a radio frequency signal corresponding to the base station data and a radio frequency signal corresponding to the IP data (herein, the foregoing functions may be implemented by using a power splitter). Then, the radio frequency signal corresponding to the base station data is directly output through a corresponding interface, and the radio frequency signal corresponding to the IP data needs to be converted, by using a single-ended to differential conversion module, from a single-ended signal into a differential signal applicable to network cable transmission (it may be understood that, in this embodiment, a device for implementing differential to single-ended conversion and a device for implementing single-ended to differential conversion may be a same device that integrates the foregoing two functions). After the differential signal is demodulated by the ETH PHY component in the aggregation device, a coper-side signal is obtained and then output to the MAC interface (herein, 100MBASE-X) provided by the LSW. Finally, the external IP device is connected through the uplink ETH interface.

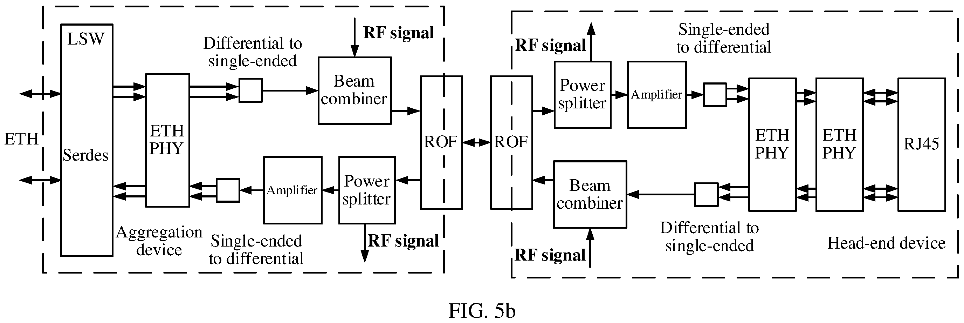

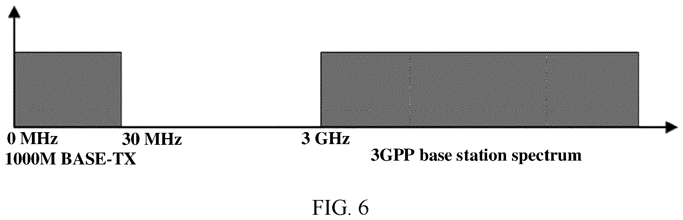

In the system architecture shown in FIG. 5a, because a large insertion loss occurs in a data transmission process of the ROF optical module, when the aggregation device and the head-end device serve as receive sides, the single-ended signal and the radio frequency signal further need to be amplified by using an amplifier, to meet a data receiving requirement. In a possible implementation of the system architecture, the system architecture may be shown in FIG. 5b. According to the system architecture shown in FIG. 5a or FIG. 5b, spectrum distribution of the base station data and the IP data during transmission on the optical fiber may be shown in FIG. 6. To be specific, a bandwidth of 0 MHz to 30 MHz may be allocated to the IP data, and the base station data may occupy a bandwidth greater than 3 GHz.

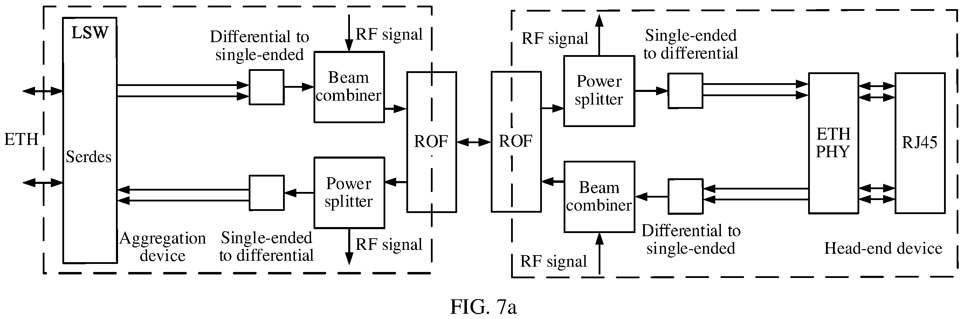

In a possible implementation, the LSW in the aggregation device supports 1000BASE-X, and the LSW in the aggregation device supports 100BASE-TX, where 1000BASE-X is an ETH protocol that supports gigabit optical transmission, and is used to transmit gigabit Ethernet data on an optical fiber. In this solution, a system architecture for performing analog-to-digital conversion and digital-to-analog conversion on the IP data in the aggregation device is shown in FIG. 7a. The LSW obtains IP data sent by an external IP device through an uplink ETH interface. The LSW LSW provides a MAC interface (herein, 1000MBASE-X) whose interface is a Serdes interface. A signal output by the Serdes interface is directly a differential signal. Because an input port of a ROF optical module is single-ended input, the aggregation device further includes a differential to single-ended conversion module, configured to convert a differential signal output by the ETH PHY component into a single-ended signal. Then, a combiner combines the single-ended signal and a radio frequency signal converted by the base station, to generate one electrical signal. Finally, the electrical signal is input to the ROF module for electrical-to-optical conversion (that is, the electrical signal is converted into an optical signal). In this case, the optical signal may be transmitted remotely on an optical fiber. After receiving the optical signal, the head-end device first needs to split the optical signal to obtain a radio frequency signal corresponding to the base station data and a radio frequency signal corresponding to the IP data (herein, the foregoing functions may be implemented by using a power splitter). Then, the radio frequency signal corresponding to the base station data is directly output through a corresponding interface, and the radio frequency signal corresponding to the IP data needs to be converted, by using a single-ended to differential conversion module, from a single-ended signal into a differential signal applicable to network cable transmission (it may be understood that, in this embodiment, a device for implementing differential to single-ended conversion and a device for implementing single-ended to differential conversion may be a same device that integrates the foregoing two functions). Because a signal received by a ROF optical module is a MAC-side signal and an ETH PHY component can be directly connected, the ETH PHY component completes conversion from a MAC interface to a coper interface. In this way, a standard 1000M BASE-T interface may be provided for connection to the third-party IP device.

The foregoing describes downlink direction data transmission. The following describes uplink direction data transmission by using a system architecture shown in FIG. 7a as an example.

The head-end device receives IP data sent by an external IP device through a standard ETH interface (for example, in the R45 form), and receives the base station data through another interface. Then, the head-end device provides a standard 1000M BASE-T interface by using an ETH PHY that is in an uplink direction, to connect to the external IP device. The IP data is output through a MAC-side interface of an ETH PHY that is in the uplink direction as a differential signal applicable to network cable transmission. Because an input port of the ROF optical module is single-ended input, the head-end device further includes a differential to single-ended conversion module, configured to convert a differential signal output by the ETH PHY component that is in the uplink direction into a single-ended signal. Then, a combiner combines the single-ended signal and the radio frequency signal converted by the base station, to generate one electrical signal. Finally, the electrical signal is input to the ROF module for electrical-to-optical conversion (that is, the electrical signal is converted into an optical signal). In this case, the optical signal may be transmitted remotely on an optical fiber. After receiving the optical signal, the aggregation device first needs to split the optical signal to obtain a radio frequency signal corresponding to the base station data and a radio frequency signal corresponding to the IP data (herein, the foregoing functions may be implemented by using a power splitter). Then, the radio frequency signal corresponding to the base station data is directly output through a corresponding interface, and the radio frequency signal corresponding to the IP data needs to be converted, by using a single-ended to differential conversion module, from a single-ended signal into a differential signal applicable to network cable transmission (it may be understood that, in this embodiment, a device for implementing differential to single-ended conversion and a device for implementing single-ended to differential conversion may be a same device that integrates the foregoing two functions). Then, the differential signal is output to the LSW to provide the MAC interface (herein, 1000MBASE-X). Finally, the external IP device is connected through the uplink ETH interface.

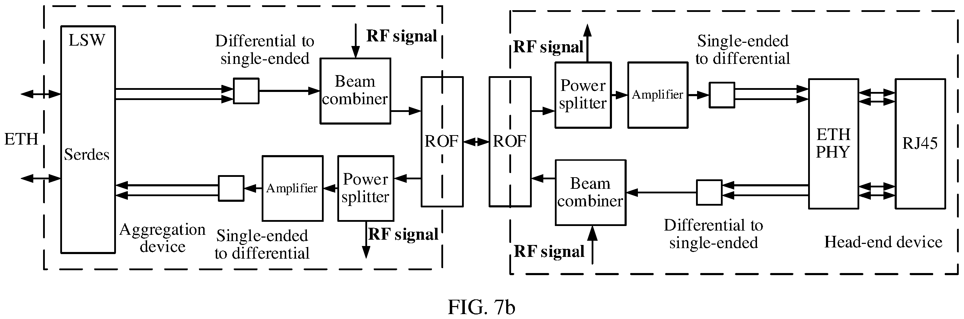

In the system architecture shown in FIG. 7a, because a large insertion loss occurs in a data transmission process of the ROF optical module, when the aggregation device and the head-end device serve as receive sides, the single-ended signal and the radio frequency signal further need to be amplified by using an amplifier, to meet a data receiving requirement. In a possible implementation of the system architecture, the system architecture may be shown in FIG. 7b.

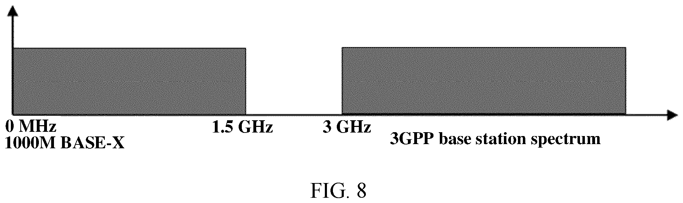

According to the system architecture shown in FIG. 7a or FIG. 7b, spectrum distribution of the base station data and the IP data during transmission on the optical fiber may be shown in FIG. 8. To be specific, a bandwidth of 0 MHz to 1.5 GHz may be allocated to the IP data, and the base station data may occupy a bandwidth greater than 3 GHz.

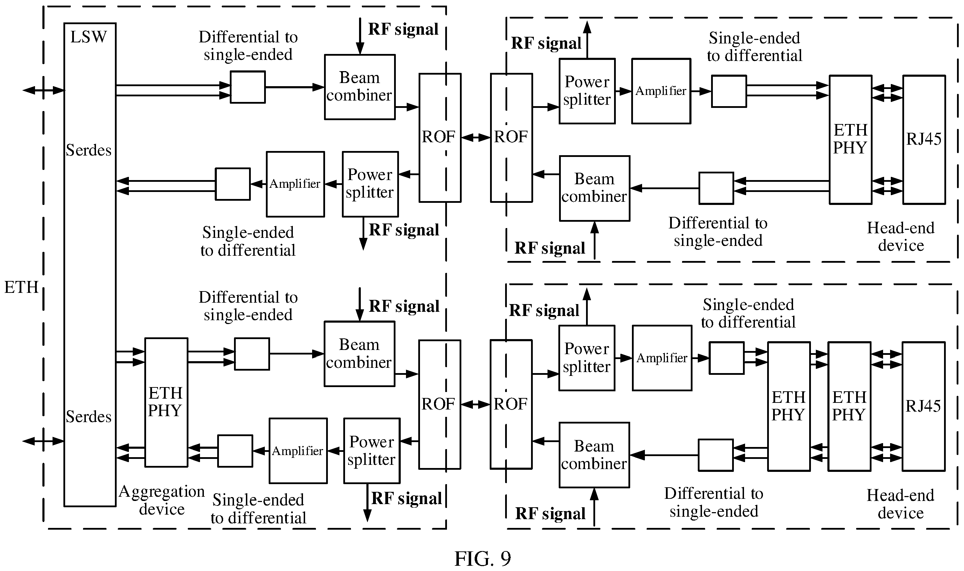

In this embodiment, the aggregation device may be connected to a plurality of head-end devices at the same time. Therefore, the LSW in the aggregation device may support only 100BASE-TX (for example, the architecture shown in FIG. 5a is cascaded), or may support only 1000BASE-X (for example, the architecture shown in FIG. 7a is cascaded), or may support both 100BASE-TX and 1000BASE-X (for example, the architecture shown in FIG. 5a is cascaded with the architecture shown in FIG. 7a). In this case, an architecture of a system for performing analog-to-digital conversion and digital-to-analog conversion on the IP data may be shown in FIG. 9. In this architecture, data transmission between the aggregation device and the head-end device is shown in FIG. 5a and FIG. 7a. Details are not described herein again.

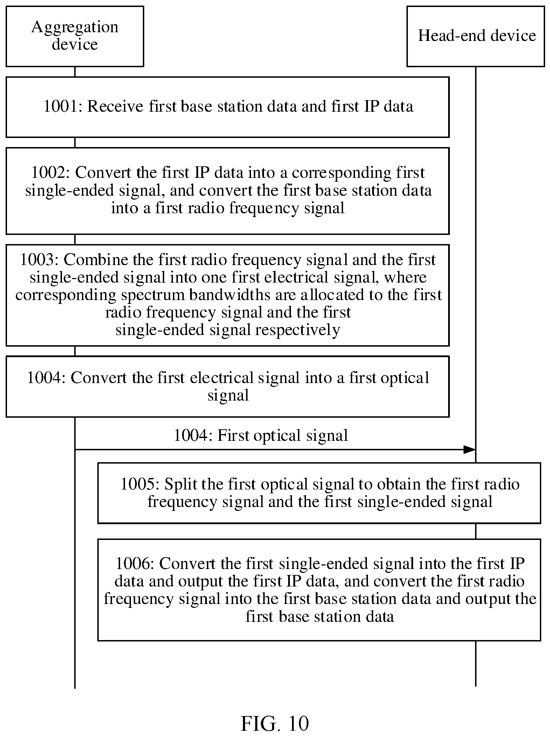

Based on the solutions in FIG. 4 to FIG. 9, the following describes a data processing method in embodiments of this application. As shown in FIG. 10, an embodiment of a data processing method in embodiments of this application includes the following steps.

1001: An aggregation device receives first base station data and first IP data.

The aggregation device receives the first base station data and the first IP data respectively through different interfaces. It may be understood that, when the aggregation device receives the first base station data and the first IP data, the method in any one of FIG. 4 to FIG. 9 may be used. Details are not described herein again.

1002: The aggregation device converts the first IP data into a corresponding first single-ended signal, and converts the first base station data into a first radio frequency signal.

In this embodiment, for details of a manner in which the aggregation device converts the first IP data into the corresponding first single-ended signal, refer to the content described in any one of FIG. 4 to FIG. 9. Details are not described herein again.

1003: The aggregation device combines the first radio frequency signal and the first single-ended signal into one first electrical signal, where corresponding spectrum bandwidths are allocated to the first radio frequency signal and the first single-ended signal respectively.

In this embodiment, for details of a manner in which the aggregation device converts the first IP data into the corresponding first single-ended signal, refer to the content described in any one of FIG. 4 to FIG. 9. Details are not described herein again.

1004: The aggregation device converts the first electrical signal into a first optical signal, and transmits the first optical signal to a head-end device through an optical fiber.

In this embodiment, for details of a manner in which the aggregation device converts the first electrical signal into the first optical signal, and transmits the first optical signal to the head-end device through the optical fiber, refer to the content described in any one of FIG. 4 to FIG. 9. Details are not described herein again.

1005: The head-end device splits the first optical signal to obtain the first radio frequency signal and the first single-ended signal.

In this embodiment, for details of a manner in which the head-end device splits the first optical signal to obtain the first radio frequency signal and the first single-ended signal, refer to the content described in any one of FIG. 4 to FIG. 9. Details are not described herein again.

1006: The head-end device converts the first single-ended signal into the first IP data and outputs the first IP data, and converts the first radio frequency signal into the first base station data and outputs the first base station data.

In this embodiment, for details of a manner in which the head-end device converts the first single-ended signal into the first IP data and outputs the first IP data, and converts the first radio frequency signal into the first base station data and outputs the first base station data, refer to the content described in any one of FIG. 4 to FIG. 9. Details are not described herein again.

In this embodiment, the aggregation device performs analog-to-digital conversion on the IP data to obtain the single-ended signal, that is, a radio frequency signal that can be transmitted on the optical fiber, converts the base station data into the radio frequency signal, combines, into one optical signal, the radio frequency signal and the radio frequency signal generated based on the IP data through conversion, and transmits the optical signal through the optical fiber. In this way, aggregation and co-transmission of the base station data and the IP data are implemented. In addition, because the base station data and the IP data can be transmitted on the optical fiber at the same time, co-cable medium transmission is implemented. This reduces repeated cabling that is for a large amount of indoor network coverage, reduces indoor coverage deployment costs, and improves deployment flexibility. In addition, because a spectrum of the optical fiber is wide, different spectrums are allocated to the base station data and the IP data respectively, so that the IP data transmission and the base station data transmission are completely decoupled, and non-mutual affect between the two types of data is implemented in performance and bandwidth, thereby providing huge space for future evolution and implementing independent evolution of each networking.

The technical solutions in embodiments of this application may be applied to various communication systems, for example, a global system for mobile communication (Global System for Mobile Communication, GSM), a code division multiple access (Code Division Multiple Access, CDMA) system, a wideband code division multiple access (Wideband Code Division Multiple Access, WCDMA) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a 5G communication system, and a future wireless communication system.

The foregoing describes the data processing method in embodiments of this application, and the following describes the aggregation device and the head-end device in embodiments of this application.

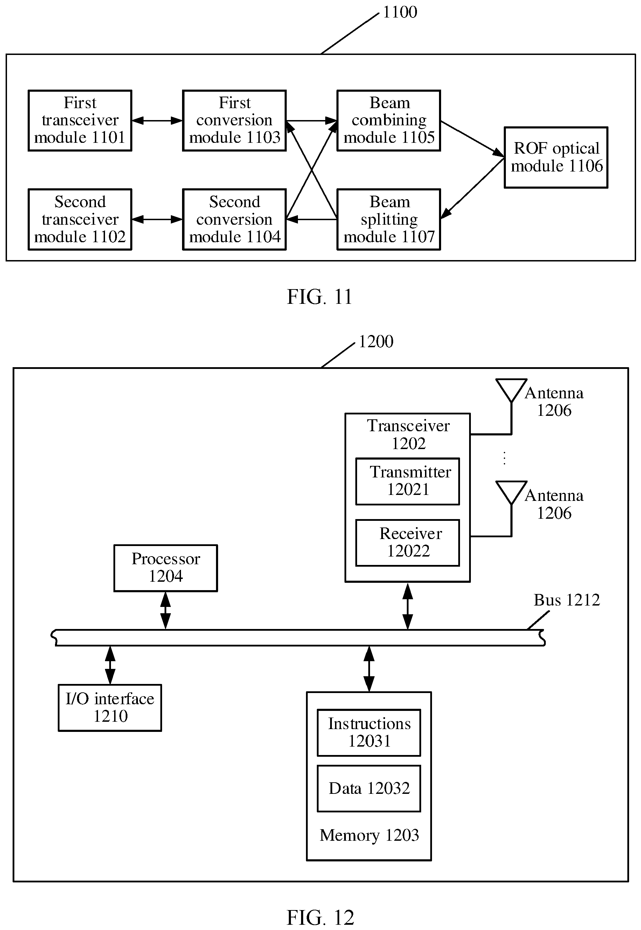

FIG. 11 is a schematic of an embodiment of an aggregation device according to an embodiment of this application. In this embodiment of this application, the aggregation device 1100 includes a first transceiver module 1101, configured to receive first base station data;
a second transceiver module 1102, configured to receive first Ethernet Protocol IP data;
a first conversion module 1103, configured to convert the first base station data into a first radio frequency signal;
a second conversion module 1104, configured to convert the first IP data into a corresponding first single-ended signal;
a beam combining module 1105, configured to combine the first radio frequency signal and the first single-ended signal into one first electrical signal, where corresponding spectrum bandwidths are allocated to the first radio frequency signal and the first single-ended signal respectively; and
a radio over fiber ROF optical module 1106, configured to: convert the first electrical signal into a first optical signal, and transmit the first optical signal to a head-end device through an optical fiber.

It may be understood that the first transceiver module 1101 and the second transceiver module 1102 have all functions of an interface configured to receive base station data and IP data in any one of the system architectures in FIG. 4 to FIG. 9. For a specific implementation, details are not described herein again. The first conversion module 1103 has all functions of a device configured to convert base station data into a radio frequency signal in any one of the system architectures in FIG. 4 to FIG. 9. For a specific implementation, details are not described herein again. The second conversion module 1104 has all functions of a device configured to implement digital-to-analog conversion or analog-to-digital conversion of IP data in any one of the system architectures in FIG. 4 to FIG. 9. For a specific implementation, details are not described herein again. The beam combining module 1105 has all functions of a device (for example, the combiner in FIG. 5a) configured to combine a radio frequency signal and a single-ended signal in any one of the system architectures in FIG. 4 to FIG. 9. For a specific implementation, details are not described herein again. The ROF optical module 1106 has all functions of a component configured to convert an electrical signal into an optical signal and perform remote transmission in any one of the system architectures in FIG. 4 to FIG. 9. For a specific implementation, details are not described herein again.

Optionally, when the aggregation device 1100 serves as a receive end, the aggregation device 1100 further includes a beam splitting module 1107. The beam splitting module 1107 has all functions of a component (for example, the power splitter in FIG. 5a) configured to split an electrical signal into a radio frequency signal and a single-ended signal in any one of the system architectures in FIG. 4 to FIG. 9. For a specific implementation, details are not described herein again.

Optionally, the aggregation device further includes an amplifier. The amplifier is configured to amplify a second single-ended signal and a second radio frequency signal.

FIG. 12 is a schematic of another embodiment of an aggregation device 1200 according to an embodiment of this application. As shown in FIG. 12, the aggregation device 1200 includes at least a processor 1204, a memory 1203, and a transceiver 1202. The memory 1203 is further configured to store instructions 12031 and data 12032. Optionally, the aggregation device 1200 may further include antennas 1206, an input/output (Input/Output, I/O) interface 1210, and a bus 1212. The transceiver 1202 further includes a transmitter 12021 and a receiver 12022. In addition, the processor 1204, the transceiver 1202, the memory 1203, and the I/O interface 1210 are communicatively connected to each other through the bus 1212, and the antennas 1206 are connected to the transceiver 1202.

The processor 1204 may be a general-purpose processor, for example, but not limited to a central processing unit (central processing unit, CPU), or may be a dedicated processor, for example, but not limited to a digital signal processor (digital signal processor, DSP), an application-specific integrated circuit (application-specific integrated circuit, ASIC), and a field programmable gate array (field programmable gate array, FPGA). Alternatively, the processor 1204 may be a neural network processing unit (neural processing unit, NPU). In addition, the processor 1204 may alternatively be a combination of a plurality of processors. Particularly, in the technical solutions provided in embodiments of this application, the processor 1204 may be configured to perform related steps of an Ethernet packet generation method in a subsequent method embodiment. The processor 1204 may be a processor specially designed to perform the foregoing steps and/or operations, or may be a processor that performs the foregoing steps and/or operations by reading and executing the instructions 12031 stored in the memory 1203. The processor 1204 may need to use the data 12032 in a process of performing the foregoing steps and/or operations.

The transceiver 1202 includes the transmitter 12021 and the receiver 12022. In an optional implementation, the transmitter 12021 is configured to send a signal through the antenna 1206. The receiver 12022 is configured to receive a signal through at least one of the antennas 1206. Particularly, in the technical solutions provided in embodiments of this application, the transmitter 12021 may be specifically configured to perform, through at least one of the antennas 1206, an operation, for example, an operation performed by a receiving module or a transceiver module in the aggregation device 1200 when the flexible Ethernet data processing method in a subsequent method embodiment is applied to the aggregation device 1200.

In this embodiment of this application, the transceiver 1202 supports the aggregation device 1200 in performing the foregoing receiving function and sending function. A processor having a processing function is considered as the processor 1204. The receiver 12022 may also be referred to as an input port, a receiver circuit, or the like, and the transmitter 12021 may be referred to as a transmitter, a transmitter circuit, or the like.

The processor 1204 may be configured to execute the instructions stored in the memory 1203, to control the transceiver 1202 to receive a message and/or send a message, to complete a function of the aggregation device 1200 in the method embodiment of this application. In an implementation, it may be considered that a function of the transceiver 1202 is implemented by using a transceiver circuit or a chip dedicated for a sending/receiving purpose. In this embodiment of this application, that the transceiver 1202 receives a message may be understood as that the transceiver 1202 inputs a message, and that the transceiver 1202 sends a message may be understood as that the transceiver 1202 outputs a message.

The memory 1203 may be various types of storage media, for example, a random access memory (random access memory, RAM), a read-only memory (read-only memory, ROM), a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a register. The memory 1203 is specifically configured to store the instructions 12031 and the data 12032. The processor 1204 may read and execute the instructions 12031 stored in the memory 1203, to perform the steps and/or the operations in the method embodiment of this application. The data 12032 may be needed in a process of performing the operations and/or the steps in the method embodiment of this application.

Optionally, the aggregation device 1200 may further include the I/O interface 1210. The I/O interface 1210 is configured to: receive instructions and/or data from a peripheral device, and output instructions and/or data to the peripheral device.

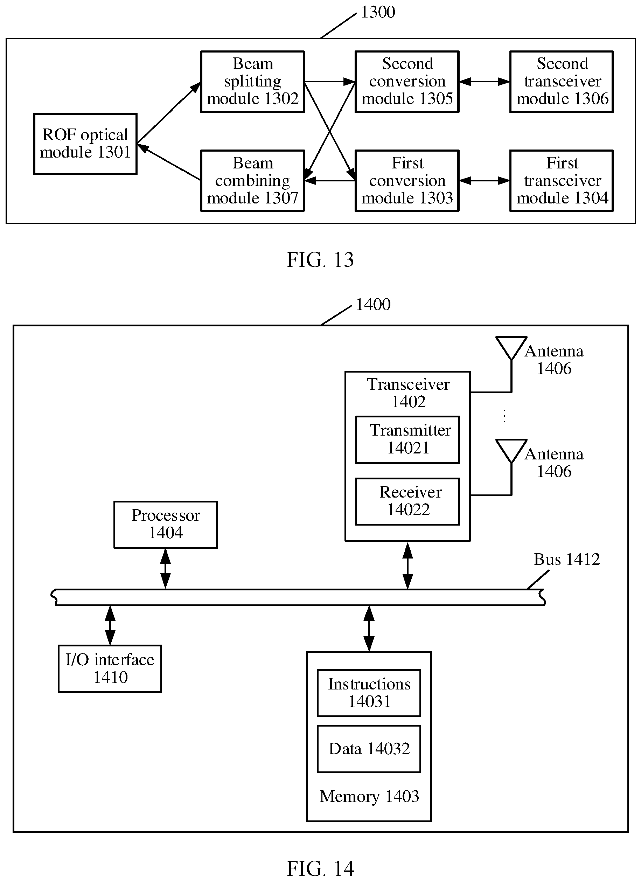

FIG. 13 is a schematic of an embodiment of a head-end device according to an embodiment of this application. In this embodiment of this application, the head-end device 1300 includes: a radio over fiber ROF optical module 1301, configured to receive a first optical signal transmitted by an aggregation device through an optical fiber, where the first optical signal is generated based on a first radio frequency signal and a first single-ended signal through combination and conversion, corresponding spectrum bandwidths are allocated to the first radio frequency signal and the first single-ended signal respectively, the first radio frequency signal is obtained based on first base station data through conversion, and the first single-ended signal is obtained based on first IP data through conversion;
a beam splitting module 1302, configured to split the first optical signal to obtain the first radio frequency signal and the first single-ended signal;
a first conversion module 1303, configured to convert the first radio frequency signal into the first base station data;
a first transceiver module 1304, configured to output the first base station data;
a second conversion module 1305, configured to convert the first single-ended signal into the first IP data; and
a second transceiver module 1306, configured to output the first IP data.

It may be understood that the first transceiver module 1304 and the second transceiver module 1306 have all functions of an interface configured to receive base station data and IP data in any one of the system architectures in FIG. 4 to FIG. 9. For a specific implementation, details are not described herein again. The first conversion module 1303 has all functions of a device configured to convert base station data into a radio frequency signal in any one of the system architectures in FIG. 4 to FIG. 9. For a specific implementation, details are not described herein again. The second conversion module 1305 has all functions of a device configured to implement digital-to-analog conversion or analog-to-digital conversion of IP data in any one of the system architectures in FIG. 4 to FIG. 9. For a specific implementation, details are not described herein again. The beam splitting module 1302 has all functions of a device (for example, the power splitter in FIG. 5a) configured to split an electrical signal into a radio frequency signal and a single-ended signal in any one of the system architectures in FIG. 4 to FIG. 9. For a specific implementation, details are not described herein again. The ROF optical module 1301 has all functions of a component configured to convert an electrical signal into an optical signal and perform remote transmission or convert an optical signal into an electrical signal in any one of the system architectures in FIG. 4 to FIG. 9. For a specific implementation, details are not described herein again.

Optionally, when the head-end device 1300 serves as a receive end, the head-end device 1300 further includes a beam combining module 1307. The beam combining module 1307 has all functions of a component (for example, the combiner in FIG. 5a) configured to combine a radio frequency signal and a single-ended signal into an electrical signal in any one of the system architectures in FIG. 4 to FIG. 9. For a specific implementation, details are not described herein again.

Optionally, the head-end device further includes an amplifier, and the amplifier is configured to amplify the first single-ended signal and the first radio frequency signal.

FIG. 14 is a schematic of another embodiment of a head-end device 1400 according to an embodiment of this application. As shown in FIG. 14, the head-end device 1400 includes at least a processor 1404, a memory 1403, and a transceiver 1402. The memory 1403 is further configured to store instructions 14031 and data 14032. Optionally, the head-end device 1400 may further include antennas 1406, an input/output (Input/Output, I/O) interface 1410, and a bus 1412. The transceiver 1402 further includes a transmitter 14021 and a receiver 14022. In addition, the processor 1404, the transceiver 1402, the memory 1403, and the I/O interface 1410 are communicatively connected to each other through the bus 1412, and the antennas 1406 are connected to the transceiver 1402.

The processor 1404 may be a general-purpose processor, for example, but not limited to a central processing unit (central processing unit, CPU), or may be a dedicated processor, for example, but not limited to a digital signal processor (digital signal processor, DSP), an application-specific integrated circuit (application-specific integrated circuit, ASIC), and a field programmable gate array (field programmable gate array, FPGA). Alternatively, the processor 1404 may be a neural network processing unit (neural processing unit, NPU). In addition, the processor 1404 may alternatively be a combination of a plurality of processors. Particularly, in the technical solutions provided in embodiments of this application, the processor 1404 may be configured to perform related steps of an Ethernet packet generation method in a subsequent method embodiment. The processor 1404 may be a processor specially designed to perform the foregoing steps and/or operations, or may be a processor that performs the foregoing steps and/or operations by reading and executing the instructions 14031 stored in the memory 1403. The processor 1404 may need to use the data 14032 in a process of performing the foregoing steps and/or operations.

The transceiver 1402 includes the transmitter 14021 and the receiver 14022. In an optional implementation, the transmitter 14021 is configured to send a signal through the antenna 1406. The receiver 14022 is configured to receive a signal through at least one of the antennas 1406. Particularly, in the technical solutions provided in embodiments of this application, the transmitter 14021 may be specifically configured to perform, through at least one of the antennas 1406, an operation, for example, an operation performed by a receiving module or a transceiver module in the head-end device 1400 when the flexible Ethernet data processing method in a subsequent method embodiment is applied to the head-end device 1400.

In this embodiment of this application, the transceiver 1402 supports the head-end device 1400 in performing the foregoing receiving function and sending function. A processor having a processing function is considered as the processor 1404. The receiver 14022 may also be referred to as an input port, a receiver circuit, or the like, and the transmitter 14021 may be referred to as a transmitter, a transmitter circuit, or the like.

The processor 1404 may be configured to execute the instructions stored in the memory 1403, to control the transceiver 1402 to receive a message and/or send a message, to complete a function of the head-end device 1400 in the method embodiment of this application. In an implementation, it may be considered that a function of the transceiver 1402 is implemented by using a transceiver circuit or a chip dedicated for a sending/receiving purpose. In this embodiment of this application, that the transceiver 1402 receives a message may be understood as that the transceiver 1402 inputs a message, and that the transceiver 1402 sends a message may be understood as that the transceiver 1402 outputs a message.

The memory 1403 may be various types of storage media, for example, a random access memory (random access memory, RAM), a read-only memory (read-only memory, ROM), a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a register. The memory 1403 is specifically configured to store the instructions 14031 and the data 14032. The processor 1404 may read and execute the instructions 14031 stored in the memory 1403, to perform the steps and/or the operations in the method embodiment of this application. The data 14032 may be needed in a process of performing the operations and/or the steps in the method embodiment of this application.

Optionally, the head-end device 1400 may further include the I/O interface 1410. The I/O interface 1410 is configured to: receive instructions and/or data from a peripheral device, and output instructions and/or data to the peripheral device.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be or may not be physically separate, and parts displayed as units may be or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A data processing method, comprising:
receiving, by an aggregation device, first base station data and first Ethernet Protocol IP data;
converting, by the aggregation device, the first IP data into a corresponding first single-ended signal, and converting the first base station data into a first radio frequency signal;
combining, by the aggregation device, the first radio frequency signal and the first single-ended signal into one first electrical signal, wherein corresponding spectrum bandwidths are allocated to the first radio frequency signal and the first single-ended signal respectively; and
converting, by the aggregation device, the first electrical signal into a first optical signal, and transmitting the first optical signal to a head-end device through an optical fiber.

2. The method according to claim 1, wherein the converting, by the aggregation device, the first IP data into a corresponding first single-ended signal comprises:
converting, by the aggregation device, the first IP data into a first differential signal according to a 100BASE-TX protocol by using an Ethernet physical layer component; and
converting, by the aggregation device, the first differential signal into the first single-ended signal; or
converting, by the aggregation device, the first IP data into a first differential signal according to a 1000BASE-X protocol by using a Serdes interface that supports the 1000BASE-X protocol; and
converting, by the aggregation device, the first differential signal into the first single-ended signal.

3. The method according to claim 1 or 2, wherein the method further comprises:
receiving, by the aggregation device, a second optical signal sent by the head-end device, wherein the second optical signal is generated based on a second radio frequency signal and a second single-ended signal through combination, corresponding spectrum bandwidths are allocated to the second radio frequency signal and the second single-ended signal respectively, the second radio frequency signal is obtained based on second base station data through conversion, and the second single-ended signal is obtained based on second IP data through conversion;
splitting, by the aggregation device, the second optical signal to obtain the second radio frequency signal and the second single-ended signal; and
converting, by the aggregation device, the second single-ended signal into the second IP data and outputting the second IP data, and converting the second radio frequency signal into the second base station data and outputting the second base station data.

4. The method according to claim 3, wherein the converting, by the aggregation device, the second single-ended signal into the second IP data comprises:
converting, by the aggregation device, the second single-ended signal into a second differential signal; and
converting, by the aggregation device, the second differential signal into the second IP data according to the 100BASE-TX protocol by using an Ethernet physical layer component; or
converting, by the aggregation device, the second single-ended signal into a second differential signal; and
converting, by the aggregation device, the second differential signal into the second IP data according to the 1000BASE-X protocol by using a Serdes interface that supports the 1000BASE-X protocol.

5. The method according to claim 3, wherein before the converting, by the aggregation device, the second single-ended signal into the second IP data and outputting the second IP data, and converting the second radio frequency signal into the second base station data and outputting the second base station data, the method further comprises:
amplifying, by the aggregation device, the second single-ended signal and the second radio frequency signal by using an amplifier.

6. A data processing method, comprising:
receiving, by a head-end device, a first optical signal transmitted by an aggregation device through an optical fiber, wherein the first optical signal is generated based on a first radio frequency signal and a first single-ended signal through combination and conversion, corresponding spectrum bandwidths are allocated to the first radio frequency signal and the first single-ended signal respectively, the first radio frequency signal is obtained based on first base station data through conversion, and the first single-ended signal is obtained based on first IP data through conversion;
splitting, by the head-end device, the first optical signal to obtain the first radio frequency signal and the first single-ended signal; and
converting, by the head-end device, the first single-ended signal into the first IP data and outputting the first IP data, and converting the first radio frequency signal into the first base station data and outputting the first base station data.

7. The method according to claim 6, wherein the converting, by the head-end device, the first single-ended signal into the first IP data comprises:
converting, by the head-end device, the first single-ended signal into a first differential signal; and
converting, by the head-end device, the first differential signal into the first IP data according to a 100BASE-TX protocol by using two Ethernet physical layer components that are connected back to back; or
converting, by the head-end device, the first single-ended signal into a first differential signal; and
converting, by the head-end device, the first differential signal into the first IP data according to a 1000BASE-X protocol by using one Ethernet physical layer component.

8. The method according to claim 6, wherein before the converting, by the head-end device, the first single-ended signal into the first IP data and outputting the first IP data, and converting the first radio frequency signal into the first base station data and outputting the first base station data, the method further comprises:
amplifying, by the head-end device, the first single-ended signal and the first radio frequency signal by using an amplifier.

9. The method according to any one of claims 6 to 8, wherein the method further comprises:
receiving, by the head-end device, second base station data and second IP data;
converting, by the head-end device, the second IP data into a corresponding second single-ended signal, and converting the second base station data into a second radio frequency signal;
combining, by the head-end device, the second radio frequency signal and the second single-ended signal into one second electrical signal, wherein corresponding spectrum bandwidths are allocated to the second radio frequency signal and the second single-ended signal respectively; and
converting, by the head-end device, the second electrical signal into a second optical signal, and transmitting the second optical signal to the aggregation device through the optical fiber.

10. The method according to claim 9, wherein the converting, by the head-end device, the second IP data into a corresponding second single-ended signal comprises:
converting, by the head-end device, the second IP data into a second differential signal according to the 100BASE-TX protocol by using two Ethernet physical layer components that are connected back to back; and
converting, by the head-end device, the second differential signal into the second single-ended signal; or
converting, by the head-end device, the second IP data into a second differential signal according to the 1000BASE-X protocol by using one Ethernet physical layer component; and
converting, by the head-end device, the second differential signal into the second single-ended signal.

11. An aggregation device, comprising:
a first transceiver module, configured to receive first base station data;
a second transceiver module, configured to receive first Ethernet Protocol IP data;
a first conversion module, configured to convert the first base station data into a first radio frequency signal;
a second conversion module, configured to convert the first IP data into a corresponding first single-ended signal;
a beam combining module, configured to combine the first radio frequency signal and the first single-ended signal into one first electrical signal, wherein corresponding spectrum bandwidths are allocated to the first radio frequency signal and the first single-ended signal respectively; and
a radio over fiber ROF optical module, configured to: convert the first electrical signal into a first optical signal, and transmit the first optical signal to a head-end device through an optical fiber.

12. The aggregation device according to claim 11, wherein the second conversion module comprises a first Ethernet physical layer component and a first differential to single-ended conversion unit;
the first Ethernet physical layer component is configured to convert the first IP data into a first differential signal according to a 100BASE-TX protocol; and
the first differential to single-ended conversion unit is configured to convert the first differential signal into the first single-ended signal; or
the second conversion module comprises a second differential to single-ended conversion unit;
the second transceiver module converts the first IP data into a first differential signal according to a 100BASE-TX protocol; and
the second differential to single-ended conversion unit is configured to convert the first differential signal into the first single-ended signal.

13. The aggregation device according to claim 11 or 12, wherein
the ROF optical module is further configured to receive a second optical signal sent by the head-end device, wherein the second optical signal is generated based on a second radio frequency signal and a second single-ended signal through combination and conversion, corresponding spectrum bandwidths are allocated to the second radio frequency signal and the second single-ended signal respectively, the second radio frequency signal is obtained based on second base station data through conversion, and the second single-ended signal is obtained based on second IP data through conversion;
the aggregation device further comprises:
a beam splitting module, configured to split the second optical signal to obtain the second radio frequency signal and the second single-ended signal;
the second conversion module is further configured to convert the second single-ended signal into the second IP data, and output the second IP data by using the second transceiver module; and
the first conversion module is further configured to convert the second radio frequency signal into the second base station data, and output the second base station data by using the first transceiver module.

14. The aggregation device according to claim 13, wherein the second conversion module comprises a first Ethernet physical layer component and a first single-ended to differential conversion unit;
the first single-ended to differential conversion unit converts the second single-ended signal into a second differential signal; and
the first Ethernet physical layer component converts the second differential signal into the second IP data according to the 100BASE-TX protocol; or
the second conversion module comprises a second single-ended to differential conversion unit;
the second single-ended to differential conversion unit converts the second single-ended signal into a second differential signal; and
the second transceiver module converts the second differential signal into the second IP data according to a 1000BASE-X protocol by using a Serdes interface that supports the 1000BASE-X protocol.

15. The aggregation device according to claim 13, wherein the aggregation device further comprises an amplifier, and the amplifier is configured to amplify the second single-ended signal and the second radio frequency signal.

16. A head-end device, comprising:
a radio over fiber ROF optical module, configured to receive a first optical signal transmitted by an aggregation device through an optical fiber, wherein the first optical signal is generated based on a first radio frequency signal and a first single-ended signal through combination and conversion, corresponding spectrum bandwidths are allocated to the first radio frequency signal and the first single-ended signal respectively, the first radio frequency signal is obtained based on first base station data through conversion, and the first single-ended signal is obtained based on first IP data through conversion;
a beam splitting module, configured to split the first optical signal to obtain the first radio frequency signal and the first single-ended signal;
a first conversion module, configured to convert the first radio frequency signal into the first base station data;
a first transceiver module, configured to output the first base station data;
a second conversion module, configured to convert the first single-ended signal into the first IP data; and
a second transceiver module, configured to output the first IP data.

17. The head-end device according to claim 16, wherein the second conversion module comprises a first single-ended to differential conversion unit, a first Ethernet physical layer component, and a second Ethernet physical layer component, wherein the first Ethernet physical layer component is connected to the second Ethernet physical layer component back to back;
the first single-ended to differential conversion unit is configured to convert the first single-ended signal into a first differential signal; and
the first Ethernet physical layer component and the second Ethernet physical layer component convert the first differential signal into the first IP data according to a 100BASE-TX protocol; or
the second conversion module comprises a second single-ended to differential conversion unit and a third Ethernet physical layer component;
the second single-ended to differential conversion unit is configured to convert the first single-ended signal into a first differential signal; and
the third Ethernet physical layer component is configured to convert the first differential signal into the first IP data according to a 1000BASE-X protocol.

18. The head-end device according to claim 16, wherein the head-end device further comprises an amplifier, and the amplifier is configured to amplify the first single-ended signal and the first radio frequency signal.

19. The head-end device according to any one of claims 16 to 18, wherein the first transceiver module is further configured to receive second base station data;
the second transceiver module is further configured to receive second IP data;
the first conversion module is further configured to convert the second base station data into a second radio frequency signal;
the second conversion module is further configured to convert the second IP data into a corresponding second single-ended signal;
the head-end device further comprises:
a beam combining module, configured to combine the second radio frequency signal and the second single-ended signal into one second electrical signal, wherein corresponding spectrum bandwidths are allocated to the second radio frequency signal and the second single-ended signal respectively; and
the second ROF optical module is further configured to convert the second electrical signal into a second optical signal, and transmit the second optical signal to the aggregation device through the optical fiber.

20. The head-end device according to claim 19, wherein the second conversion module comprises a first differential to single-ended conversion unit, a first Ethernet physical layer component, and a second Ethernet physical layer component, wherein the first Ethernet physical layer component is connected to the second Ethernet physical layer component back to back;
the first Ethernet physical layer component and the second Ethernet physical layer component are configured to convert the second IP data into a second differential signal according to the 100BASE-TX protocol;
the first differential to single-ended conversion unit is configured to convert the second differential signal into the second single-ended signal; or
the fourth conversion module comprises a second differential to single-ended conversion unit and a third Ethernet physical layer component;
the third Ethernet physical layer component is configured to convert the second IP data into a second differential signal according to the 1000BASE-X protocol; and
the second differential to single-ended conversion unit is configured to convert the second differential signal into the second single-ended signal.

21. An aggregation device, comprising at least one processor and a memory, wherein the processor is coupled to the memory;
the memory is configured to store a program; and
the processor is configured to execute the program in the memory, so that the aggregation device performs the method according to any one of claims 1 to 5.

22. A head-end device, comprising at least one processor and a memory, wherein the processor is coupled to the memory;
the memory is configured to store a program; and
the processor is configured to execute the program in the memory, so that the aggregation device performs the method according to any one of claims 6 to 10.

23. A computer-readable storage medium, comprising a program, wherein when the program is run on a computer, the computer is enabled to perform the method according to any one of claims 1 to 5 or 6 to 10.

24. A computer program, wherein when the computer program is run on a computer, the computer is enabled to perform the method according to any one of claims 1 to 5 or 6 to 10.

25. A communication system, comprising the aggregation device according to any one of claims 11 to 15 and the head-end device according to any one of claims 16 to 20, wherein
the aggregation device is connected to the head-end device through an optical fiber.

26. A chip system, wherein the chip system comprises one or more processors and a memory, the memory stores program instructions, and when the program instructions are executed in the one or more processors, the method according to any one of claims 1 to 5 or 6 to 10 is performed.
